(19) Europäisches Patentamt
European Patent Office
Office européen des brevets

(11) EP 3 869 348 B1

(12) EUROPEAN PATENT SPECIFICATION

(45) Date of publication and mention of the grant of the patent:
**19.02.2025 Bulletin 2025/08**

(21) Application number: **20211463.3**

(22) Date of filing: **03.12.2020**

(51) International Patent Classification (IPC):
***G06F 13/16*** *(2006.01)* ***G06F 13/42*** *(2006.01)*

(52) Cooperative Patent Classification (CPC):
**G06F 13/1668; G06F 13/4282**

(54) **CHANGING A PROCESSOR STATE BASED ON STATES OF IO DRIVERS TUNNELLING TRAFFIC ON A SERIAL BUS**

ÄNDERN EINES PROZESSOR-ZUSTANDS AUFGRUND DER ZUSTÄNDE VON IO-TREIBERN, DIE DEN VERKEHR AUF EINEM SERIELLEN BUS TUNNELN

CHANGEMENT DE L'ÉTAT D'UN PROCESSEUR EN FONCTION DE L'ÉTAT DES DIRIGEANTS D'E/S QUI ACHEMINENT LE TRAFIC SUR UN BUS SÉRIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2020 US 202016797436**

(43) Date of publication of application:
**25.08.2021 Bulletin 2021/34**

(73) Proprietor: **INTEL Corporation**
**Santa Clara, CA 95054 (US)**

(72) Inventors:
- **ISMAIL, Abdul**
  **Beaverton, OR Oregon 97007 (US)**
- **EWERT, Peter**
  **Hillsboro, OR Oregon 97124 (US)**
- **DAS, Sajal Kumar**
  **560067 Bangalore, KA (IN)**
- **K V, Abhilash**
  **560103 Bangalore, KA (IN)**
- **REGUPATHY, Rajaram**
  **560103 Bangalore, KA (IN)**

(74) Representative: **Viering, Jentschura & Partner mbB**
**Patent- und Rechtsanwälte**
**Am Brauhaus 8**
**01099 Dresden (DE)**

(56) References cited:
**US-A1- 2012 284 434**
**US-A1- 2013 336 334**
**US-A1- 2019 317 774**
**US-A1- 2019 332 558**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## TECHNICAL FIELD

Embodiments generally relate to converged input/output (IO) connection management. More particularly, embodiments relate to influencing processor governance based on serial bus converged IO connection management.

## BACKGROUND

Recent developments in USB (Universal Serial Bus, e.g., USB4 Specification, Version 1.0, August 2019, USB 3.0 Promoter Group) technology may support the use of different high speed transport protocols to tunnel IO traffic through a shared USB hub (e.g., in a converged IO/CIO architecture). In such a case, a connection manager may manage the allocation of bandwidth across the various transport protocols in use. Conventional connection manager solutions, however, may result in ineffective power and performance management of tunneled IO transactions. For example, the connection manager may select a bandwidth allocation that results in a relatively low priority protocol experiencing starvation conditions (e.g., insufficient lane assignments) and/or failures.

US 2012/284434 A1 discloses methods and apparatus for efficiently transporting data through network tunnels, including a tunneled devices that advertises certain capabilities to peer devices of a network, and discovers capabilities of peer devices of the network, and in one embodiment each device of a tunneled network derives a network parameter from a transit protocol parameters for use in data networking. A computerized apparatus includes a processor subsystem, a memory subsystem, and a tunnel communications controller operative communication with one or more network interfaces.

US 2019/317774 A1 describes automatic-switching and deployment of software or firmware based USB4 connection managers (CMs). Support for continued USB4 operation during an OS upgrade or downgrade is provided, while ensuring that the best possible CM solution is used based on the advertised platform and OS capability. USB4 controllers support a pass-through mode under which the host controller FW redirects control packets sent between an SW CM and a USB4 fabric, and a FW CM mode under which control packets are communicated between the host controller FW and the USB4 fabric to configure USB4 peripheral devices and/or USB4 hubs in the USB4 fabric.

US 2013/0336334 A1 discloses a shared physical interface, a processor coupled to the shared physical interface and a plurality of input/output, IO, drivers, each of the plurality of IO drivers configured to tunnel traffic through the shared physical interface in accordance with a corresponding protocol, wherein the corresponding protocol differs from protocols corresponding to other IO drivers of the plurality of IO drivers. A logic allocates, based on latency and performance requirements of each IO driver, bandwidth of the shared physical interface among the plurality of IO drivers.

## SUMMARY OF INVENTION

The present invention pursued in this application is defined in the appended set of claims.

## BRIEF DESCRIPTION OF THE DRAWINGS

The various advantages of the embodiments will become apparent to one skilled in the art by reading the following specification and appended claims, and by referencing the following drawings, in which:

FIG. 1 is a block diagram of an example of a multi-level scheduling architecture for tunneled paths according to an embodiment;
FIG. 2 is an illustration of an example of a converged IO architecture according to an embodiment;
FIG. 3 is a block diagram of an example of a feedback loop according to an embodiment;
FIG. 4 is a flowchart of an example of a method of operating a performance-enhanced computing system according to an embodiment;
FIG. 5 is a block diagram of an example of a more detailed converged IO architecture according to an embodiment;
FIG. 6 is a block diagram of an example of a performance-enhanced computing system according to an embodiment;
FIG. 7 is an illustration of an example of a semiconductor apparatus according to an embodiment;
FIG. 8 is a block diagram of an example of a processor according to an embodiment; and
FIG. 9 is a block diagram of an example of a multi-processor based computing system according to an embodiment.

## DESCRIPTION OF EMBODIMENTS

Turning now to FIG. 1, a multi-level scheduling architecture 10 is shown in which tunneling paths (e.g., "Path m," "Path k," "Path n," "Path q," with the exception of a high priority "Path 0") are organized into priority groups 12 (12a-12M). In general, a connection manager (not shown) may set up the tunneling paths for different protocols such as, for example, display protocols (e.g., DisplayPort/DP Standard, Version 2.0, June 26, 2019, Video Electronics Standards Association), storage protocols (e.g., USB Specification 3.1, Rev. 1.0, July 26, 2013, USB Implementers Forum), network protocols (e.g., Peripheral Components Interconnect Express/PCIe, PCI EXPRESS Base Specification 5.0, Version 1.0, May 28, 2019, PCI Special Interest Group), and so forth.

In an embodiment, the tunneling paths pass through a shared physical interface such as, for example, a USB hub (not shown). In one example, each group 12 is assigned a priority, with the highest priority group 12 being scheduled first by a priority group scheduler 16. Additionally, within each group 12, every path may be provided a weight that is used by path schedulers 14 to perform round robin scheduling. Thus, a path with weight X might have X packets scheduled for the path in a given round. In the illustrated example, the path scheduling and group scheduling information is used to initiate/trigger a state change 18 (e.g., clock frequency, operating voltage, power state and/or performance state change) in a processor (e.g., host processor, central processing unit/CPU, not shown) coupled to the shared physical interface. As will be discussed in greater detail, the state change 18 may prevent starvation conditions (e.g., insufficient lane assignments) and/or failures (e.g., user-visible failures) with respect to the different protocols. The illustrated solution therefore enables enhanced performance to be achieved in a converged IO architecture.

FIG. 2 shows a converged IO architecture 20 in which a computing system 22 uses a shared physical interface to tunnel traffic (e.g., data, instructions) to a high resolution display 24 in accordance with a display protocol (e.g., DP), a high bandwidth storage device 26 (e.g., storage device that complies with Non-Volatile Memory/NVM EXPRESS Base Specification, Revision 1.4, June 10, 2019) in accordance with a storage protocol (e.g., PCIe), a cloud computing infrastructure 28 in accordance with a network protocol (e.g., Ethernet over USB 3.0/USB3), and so forth. In an embodiment, the display protocol tunnels carry periodic information such as, for example, isochronous information and interrupts. The storage protocol and network protocol tunnels, by contrast, may carry aperiodic information (e.g., control information, bulk information) in addition to periodic information. In one example, the periodic transfers are provided with a definite service opportunity (e.g., Path 0 in FIG. 1), whereas the aperiodic transfers are scheduled using round robin scheduling within a priority group 12 (FIG. 1, e.g., the fastest transfer on an otherwise idle bus). Therefore, the connection manager may prioritize the display protocol over the storage protocol and prioritize the storage protocol over the network protocol in terms of bandwidth.

If the computing system 22 is conducting an active user activity such as, for example, playing a game served by the cloud computing infrastructure 28 and presenting the game on the display 24, while syncing data into the storage device 26, such a scenario may involve all three tunnel protocols being in peak usage (e.g., leading to a high bandwidth requirement). In such a case, the priority given to isochronous (e.g., display and/or audio activity) might lead to starvation of the storage or other USB activities. To prevent starvation conditions and other failures, knowledge of the USB4 tunneled protocol bandwidth requirements (e.g., and potential performance bottlenecks) are communicated from the connection manager to processor governors, which change the operating state of the processor. The result is more effective management of processor capabilities for better performance and power conservation.

Turning now to FIG. 3, a feedback loop 30 is shown between a connection manager daemon 32 and a USB4 governor 34 (e.g., in a Linux architecture). In the illustrated example, the connection manager daemon 32 uses a connection manager 36 (e.g., device driver) to communicate with a PCIe bus driver 38. The PCIe bus driver 38 may communicate with a software stack 40 that includes a protocol adapter 42 (e.g., implemented at a protocol adapter layer and a transport layer), a control adapter 44 (e.g., implemented at a configuration layer and the transport layer), and a lane adapter 46 (e.g., implemented at the transport layer, a logical layer, and an electrical layer).

In an embodiment, the USB4 governor 34 is coupled to user space governors 48 such as, for example, a dynamic voltage and frequency scaling (DVFS) governor and/or an active state power management (ASPM) governor. The user space governors 48 change the operating state of a CPU 54 via CPU governor drivers 50 and a CPU driver 52. In the illustrated example, the feedback loop 30 includes connection manager feedback such as, for example, the bandwidth/-power needs of the IO protocols in use. Accordingly, the state changes conducted by the user space governors 48 is initiated and/or triggered by the connection manager 36 through the feedback loop 30 to prevent starvation conditions, failures, and so forth.

FIG. 4 shows a method 60 of operating a performance-enhanced computing system. The method 60 may generally be implemented in a connection manager such as, for example, the connection manager 36 (FIG. 3), already discussed. More particularly, the method 60 may be implemented in one or more modules as a set of logic instructions stored in a machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

For example, computer program code to carry out operations shown in the method 60 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 62 provides for collecting state data from a plurality of IO drivers, wherein each of the plurality of IO drivers is to tunnel traffic through a shared physical interface in accordance with a different protocol. The state data generally indicates the level of activity and/or bandwidth demand from the different protocols and/or drivers. For example, block 62 might include collecting state data from a first IO driver, wherein the first IO driver tunnels traffic in accordance with a display protocol (e.g., DP handling periodic information). Block 62 may also collect state data from a second IO driver, wherein the second IO driver tunnels traffic in accordance with a storage protocol (e.g., USB handling periodic and/or aperiodic information). In another example, block 62 includes collecting state data from a third IO driver, wherein the third IO driver tunnels traffic in accordance with a network protocol (e.g., PCIe handling aperiodic information).

Block 64 provides for determining, based on the collected state data, a bandwidth allocation of the shared physical interface among the plurality of IO drivers. In an embodiment, block 64 includes prioritizing the display protocol over the storage protocol. Additionally, block 64 may prioritize the storage protocol over the network protocol. In one example, the bandwidth allocation specifies (e.g., in terms of bits per second/bps, lanes, etc.) the amount of bandwidth allocated to the respective protocols, drivers and/or tunnels. Illustrated block 66 provides for automatically initiating, based on the bandwidth allocation, a state change of a processor coupled to the shared physical interface. The state change includes an increase or decrease in, for example, a clock frequency, an operating voltage, a power state (e.g., Advanced Configuration and Power Interface/ACPI power state), a performance state (e.g., ACPI performance state), etc., or any combination thereof. In an embodiment, the state change prevents one or more of a starvation condition or a failure in at least one of the plurality of IO drivers.

Thus, when block 66 detects high bandwidth usage, the processor governors may be influenced and/or instructed to improve the processor performance and ensure that the bandwidth allocation is effective in improving the performance of the tunneled protocols. Subsequently, when the block 66 detects that the tunneled protocols are less bandwidth intensive, the processor governors may be influenced/instructed to enter a power conserving mode. Alternatively, block 66 may also adopt a "race to halt" mode when data (e.g., storage rather than display) intensive operation is detected in a protocol. Such an approach increases the processor clock to complete the data transfers quickly, followed by a halt to save power.

In another example, if a PCIe-based network card is used in a system along with a USB3 high-resolution webcam, block 64 may treat the PCIe traffic as a non-isochronous transfer, which will not receive guaranteed bandwidth in the shared physical interface. By contrast, block 64 may treat the USB3 traffic as an isochronous transfer that receives guaranteed bandwidth in the shared physical interface. In such a case, block 66 might instruct the processor frequency scaling governor to switch to a higher frequency. Experimental results show an unexpected 41% increase (from 57 Gbps to 79 Gbps) of TCP (Transmission Control Protocol) throughput on the PCIe network card, when switching to a "performance" governor from a "powersave" governor in such a case. The illustrated method 60 may also be useful in improving block read and write throughput when using, for example, an NVM EXPRESS solid state drive (SSD) as secondary storage. The method 60 therefore enhances performance at least in terms of fewer starvation conditions and/or failures in a converged IO architecture.

FIG. 5 shows a more detailed converged IO architecture 70. In the illustrated example, a USB4 connection manager 72 (e.g., including logic instructions, configurable logic, fixed-functionality hardware logic, etc., or any combination thereof) sets up a USB driver 74, a PCIe bus driver 76, and a display kernel mode driver 78 to tunnel USB4 packets into a host router 80, which is coupled to a USB4 port and physical layer (Phy) 82. The connection manager 72 collects periodic/aperiodic usage state data 102 from the USB driver 74, high bandwidth device state data 104 from the PCIe bus driver 76, and high resolution state data 106 from the display kernel mode driver 78. The connection manager 72 then computes 84 overall bandwidth usage for the USB driver 74, the PCIe bus driver 76, and the display kernel mode driver 78.

In an embodiment, the connection manager 72 triggers 86 a switch between performance and power save governors. Upon detecting the switch, a CPU frequency (e.g., DVFS) core 88 obtains 90 P-state information for a scaling governor 92. In one example, the scaling governor 92 issues 94 a scale up or scale down signal to a CPU scaling driver 96, which in turn sends 98 available P-states for a CPU group back to the scaling governor 92. The CPU scaling driver 96 may communicate directly with one or more CPU cores 100.

Thus, the connection manager 72 leverages knowledge of the various protocol drivers to manage the bandwidth allocation and other IO functionalities. As already noted, between the IO groups, DP may be part of the highest priority group, followed by USB3 and PCIe sharing the next lower priority group. Within the USB3 & PCIe priority group, USB3 may receive higher round-robin weightage and have bandwidth reserved for isochronous transfers.

For example, considering a bandwidth allocation out of 40 Gbps (e.g., in decreasing order) DP, which is all isochronous, may receive 80% of the bandwidth allocation, depending on the number of DP links (e.g., up to two) and the number of lanes per link (e.g., up to four, with one DP link).

$$\text{Bandwidth} = \text{Link Rate} * \text{Lane-count} * 8/10$$

For example, for high bit rate (HBR) 3x4Lanes: Bandwidth = 8.1Gbps * 4 * 0.8 = 25.92 Gbps

The remaining bandwidth for the periodic/aperiodic usage from the USB driver 74 may be used at a maximum 20Gbps and the high bandwidth device usage from the PCIe bus driver 76 may be up to sixteen lanes (e.g., NVME storage device). Accordingly, the connection manager 72 may determine the bandwidth remaining and the class level activities of the USB driver 74 and the PCIe bus driver 76 to determine the functionalities configured on top of these IO protocols. The connection manager 72 also compares this information with bandwidth health and failure information. Based on these inputs, when the activity is high, the illustrated connection manager 72 instructs the processor governor to switch to performance mode (e.g., "turbo" mode). The connection manager 72 may also directly skew the clock to a higher value to improve the bandwidth health. Finally, when the connection manager 72 determines that the activity on the tunneled protocols is reduced or disconnected, the connection manager 72 may instruct the processor governors to switch to "powersave" or instruct frameworks managing the IO framework (e.g., ASPM) to switch to low power modes.

As already noted, the connection manager 72 may alternatively conserve energy during operation by adopting a race to halt mode on high data transfer operations. Such a mode may be achieved by skewing the clock to higher performance, completing data intensive transfers and then entering a power saving mode.

Turning now to FIG. 6, a performance-enhanced computing system 151 is shown. The system 151 may generally be part of an electronic device/platform having computing functionality (e.g., personal digital assistant/PDA, notebook computer, tablet computer, convertible tablet, server), communications functionality (e.g., smart phone), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), etc., or any combination thereof. In the illustrated example, the system 151 includes a host processor 153 (e.g., CPU) having a governor 154 and an integrated memory controller (IMC) 155 that is coupled to a system memory 157.

The illustrated system 151 also includes an input output (IO) module 159 implemented together with the host processor 153 and a graphics processor 161 (e.g., graphics processing unit/GPU) on a semiconductor die 163 as a system on chip (SoC). The illustrated IO module 159 communicates with, for example, a display 165 (e.g., touch screen, liquid crystal display/LCD, light emitting diode/LED display), a network controller 167 (e.g., wired and/or wireless), and mass storage 169 (e.g., hard disk drive/HDD, optical disk, solid state drive/SSD, flash memory). The IO module 159 also includes a shared physical interface 168 (e.g., USB hub).

In an embodiment, the host processor 153, the graphics processor 161 and/or the IO module 159 execute connection manager program instructions 171 retrieved from the system memory 157 and/or the mass storage 169 to perform one or more aspects of the method 60 (FIG. 4), already discussed. Thus, execution of the illustrated instructions 171 causes the computing system 151 to collect state data from a plurality of IO drivers wherein each of the IO drivers is to tunnel traffic through the shared physical interface 168 in accordance with a different protocol. For example, a first IO driver may tunnel traffic to the display 165 in accordance with a display protocol, a second IO driver may tunnel traffic to the mass storage 169 in accordance with a storage protocol, a third IO driver may tunnel traffic to the network controller 167 in accordance with a network protocol, and so forth. The computing system 151 may also support THUNDERBOLT interfaces and the daisy-chaining of devices (e.g., in a host-to-host configuration).

Execution of the instructions 171 also causes the computing system 151 to determine, based on the state data, a bandwidth allocation of the shared physical interface 168 among the plurality of IO drivers. In an embodiment, the bandwidth allocation prioritizes the display protocol over the storage protocol. The bandwidth allocation may also prioritize the storage protocol over the network protocol. Execution of the instructions 171 causes the computing system 151 to initiate a state change (e.g., clock frequency change, operating voltage change, power state change, performance state change, etc.) of the host processor 153 based on the bandwidth allocation. The state change, which may be triggered via one or more instructions to the governor 154, prevents a starvation condition and/or a failure in at least one of the plurality of IO drivers. The computing system 151 is therefore considered performance-enhanced at least to the extent that it encounters fewer starvation conditions and/or failures in a converged IO architecture.

FIG. 7 shows a semiconductor package apparatus 173. The illustrated apparatus 173 includes one or more substrates 175 (e.g., silicon, sapphire, gallium arsenide) and logic 177 (e.g., transistor array and other integrated circuit/IC components) coupled to the substrate(s) 175. The logic 177 is implemented at least partly in configurable logic or fixed-functionality logic hardware. In one example, the logic 177 implements one or more aspects of the method 60 (FIG. 4), already discussed. Thus, the logic 177 collects state data from a plurality of IO drivers, wherein each of the IO drivers is to tunnel traffic through a shared physical interface in accordance with a different protocol. For example, a first IO driver may tunnel traffic to a display in accordance with a display protocol, a second IO driver may tunnel traffic to a mass storage in accordance with a storage protocol, a third IO driver may tunnel traffic to a network controller in accordance with a network protocol, and so forth.

The logic 177 also determines based on the state data, a bandwidth allocation of the shared physical interface among the plurality of IO drivers. In an embodiment, the bandwidth allocation prioritizes the display protocol over the storage protocol. The bandwidth allocation may also prioritize the storage protocol over the network protocol. In one example, the logic 177 initiates a state change (e.g., clock frequency change, operating voltage change, power state change, performance state change, etc.) of a processor (e.g., host processor, graphics processor) based on the bandwidth allocation. The state change, which may be triggered via one or more instructions to a governor, prevents a starvation condition and/or a failure in at least one of the plurality of IO drivers. The apparatus 173 is therefore considered performance-enhanced at least to the extent that it encounters fewer starvation conditions and/or failures in a converged IO architecture.

In one example, the logic 177 includes transistor channel regions that are positioned (e.g., embedded) within the substrate(s) 175. Thus, the interface between the logic 177 and the substrate(s) 175 may not be an abrupt junction. The logic 177 may also be considered to include an epitaxial layer that is grown on an initial wafer of the substrate(s) 175.

FIG. 8 illustrates a processor core 200 according to one embodiment. The processor core 200 may be the core for any type of processor, such as a micro-processor, an embedded processor, a digital signal processor (DSP), a network processor, or other device to execute code. Although only one processor core 200 is illustrated in FIG. 8, a processing element may alternatively include more than one of the processor core 200 illustrated in FIG. 8. The processor core 200 may be a single-threaded core or, for at least one embodiment, the processor core 200 may be multithreaded in that it may include more than one hardware thread context (or "logical processor") per core.

FIG. 8 also illustrates a memory 270 coupled to the processor core 200. The memory 270 may be any of a wide variety of memories (including various layers of memory hierarchy) as are known or otherwise available to those of skill in the art. The memory 270 may include one or more code 213 instruction(s) to be executed by the processor core 200, wherein the code 213 implements the method 60 (FIG. 4), already discussed. The processor core 200 follows a program sequence of instructions indicated by the code 213. Each instruction may enter a front end portion 210 and be processed by one or more decoders 220. The decoder 220 may generate as its output a micro operation such as a fixed width micro operation in a predefined format, or may generate other instructions, microinstructions, or control signals which reflect the original code instruction. The illustrated front end portion 210 also includes register renaming logic 225 and scheduling logic 230, which generally allocate resources and queue the operation corresponding to the convert instruction for execution.

The processor core 200 is shown including execution logic 250 having a set of execution units 255-1 through 255-N. Some embodiments may include a number of execution units dedicated to specific functions or sets of functions. Other embodiments may include only one execution unit or one execution unit that can perform a particular function. The illustrated execution logic 250 performs the operations specified by code instructions.

After completion of execution of the operations specified by the code instructions, back end logic 260 retires the instructions of the code 213. In one embodiment, the processor core 200 allows out of order execution but requires in order retirement of instructions. Retirement logic 265 may take a variety of forms as known to those of skill in the art (e.g., re-order buffers or the like). In this manner, the processor core 200 is transformed during execution of the code 213, at least in terms of the output generated by the decoder, the hardware registers and tables utilized by the register renaming logic 225, and any registers (not shown) modified by the execution logic 250.

Although not illustrated in FIG. 8, a processing element may include other elements on chip with the processor core 200. For example, a processing element may include memory control logic along with the processor core 200. The processing element may include I/O control logic and/or may include I/O control logic integrated with memory control logic. The processing element may also include one or more caches.

Referring now to FIG. 9, shown is a block diagram of a computing system 1000 embodiment in accordance with an embodiment. Shown in FIG. 9 is a multiprocessor system 1000 that includes a first processing element 1070 and a second processing element 1080. While two processing elements 1070 and 1080 are shown, it is to be understood that an embodiment of the system 1000 may also include only one such processing element.

The system 1000 is illustrated as a point-to-point interconnect system, wherein the first processing element 1070 and the second processing element 1080 are coupled via a point-to-point interconnect 1050. It should be understood that any or all of the interconnects illustrated in FIG. 9 may be implemented as a multi-drop bus rather than point-to-point interconnect.

As shown in FIG. 9, each of processing elements 1070 and 1080 may be multicore processors, including first and second processor cores (i.e., processor cores 1074a and 1074b and processor cores 1084a and 1084b). Such cores 1074a, 1074b, 1084a, 1084b may be configured to execute instruction code in a manner similar to that discussed above in connection with FIG. 8.

Each processing element 1070, 1080 may include at least one shared cache 1896a, 1896b. The shared cache 1896a, 1896b may store data (e.g., instructions) that are utilized by one or more components of the processor, such as the cores 1074a, 1074b and 1084a, 1084b, respectively. For example, the shared cache 1896a, 1896b may locally cache data stored in a memory 1032, 1034 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1070, 1080, it is to be understood that the scope of the embodiments are not so limited. In other embodiments, one or more additional processing elements may be present in a given processor. Alternatively, one or more of processing elements 1070, 1080 may be an element other than a processor, such as an accelerator or a field programmable gate array. For example, additional processing element(s) may include additional processors(s) that are the same as a first processor 1070, additional processor(s) that are heterogeneous or asymmetric to processor a first processor 1070, accelerators (such as, e.g., graphics accelerators or digital signal processing (DSP) units), field programmable gate arrays, or any other processing element. There can be a variety of differences between the processing elements 1070, 1080 in terms of a spectrum of metrics of merit including architectural, micro architectural, thermal, power consumption characteristics, and the like. These differences may effectively manifest themselves as asymmetry and heterogeneity amongst the processing elements 1070, 1080. For at least one embodiment, the various processing elements 1070, 1080 may reside in the same die package.

The first processing element 1070 may further include memory controller logic (MC) 1072 and point-to-point (P-P) interfaces 1076 and 1078. Similarly, the second processing element 1080 may include a MC 1082 and P-P interfaces 1086 and 1088. As shown in FIG. 9, MC's 1072 and 1082 couple the processors to respective memories, namely a memory 1032 and a memory 1034, which may be portions of main memory locally attached to the respective processors. While the MC 1072 and 1082 is illustrated as integrated into the processing elements 1070, 1080, for alternative embodiments the MC logic may be discrete logic outside the processing elements 1070, 1080 rather than integrated therein.

The first processing element 1070 and the second processing element 1080 may be coupled to an I/O subsystem 1090 via P-P interconnects 1076 1086, respectively. As shown in FIG. 9, the I/O subsystem 1090 includes P-P interfaces 1094 and 1098. Furthermore, I/O subsystem 1090 includes an interface 1092 to couple I/O subsystem 1090 with a high performance graphics engine 1038. In one embodiment, bus 1049 may be used to couple the graphics engine 1038 to the I/O subsystem 1090. Alternately, a point-to-point interconnect may couple these components.

In turn, I/O subsystem 1090 may be coupled to a first bus 1016 via an interface 1096. In one embodiment, the first bus 1016 may be a Peripheral Component Interconnect (PCI) bus, or a bus such as a PCI Express bus or another third generation I/O interconnect bus, although the scope of the embodiments are not so limited.

As shown in FIG. 9, various I/O devices 1014 (e.g., biometric scanners, speakers, cameras, sensors) may be coupled to the first bus 1016, along with a bus bridge 1018 which may couple the first bus 1016 to a second bus 1020. In one embodiment, the second bus 1020 may be a low pin count (LPC) bus. Various devices may be coupled to the second bus 1020 including, for example, a keyboard/mouse 1012, communication device(s) 1026, and a data storage unit 1019 such as a disk drive or other mass storage device which may include code 1030, in one embodiment. The illustrated code 1030 implements the method 60 (FIG. 4), already discussed. Further, an audio I/O 1024 may be coupled to second bus 1020 and a battery 1010 may supply power to the computing system 1000.

Note that other embodiments are contemplated. For example, instead of the point-to-point architecture of FIG. 9, a system may implement a multi-drop bus or another such communication topology. Also, the elements of FIG. 9 may alternatively be partitioned using more or fewer integrated chips than shown in FIG. 9.

Thus, technology described herein may influence PCIe active-state power management (ASPM) for performance and power. The technology may also influence CPU governors for clock (e.g., performance) to improve USB class performance. As a result, the technology compensates the bandwidth needs of tunneled protocols to ensure seamless tunneling without starvation or failures. Thus, a better user experience is achieved with better performance.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same.

As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the computing system within which the embodiment is to be implemented, i.e., such specifics should be well within purview of one skilled in the art.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A; B; C; A and B; A and C; B and C; or A, B and C.

## Claims

**1.** A computing system comprising:

- a shared physical interface (168);
- a processor coupled to the shared physical interface (168);
- a plurality of input/output, IO, drivers, each of the plurality of IO drivers configured to tunnel traffic through the shared physical interface (168) in accordance with a corresponding protocol, wherein the corresponding protocol differs from protocols corresponding to other IO drivers of the plurality of IO drivers;
- a semiconductor apparatus comprising:
  - one or more substrates (175); and
  - logic (177) coupled to the one or more substrates (175), wherein the logic (177) is implemented at least partly in one or more of configurable logic or fixed-functionality hardware logic, the logic (177) configured to:
    - collect state data from the plurality of IO drivers, wherein the state data indicates, for each of the plurality of IO drivers, a level of activity and/or a bandwidth demand of the respective IO driver;
    - determine, based on the state data, a bandwidth allocation of the shared physical interface (168) among the plurality of IO drivers; and
    - initiate, based on the bandwidth allocation, a state change of the processor coupled to the shared physical interface (168), wherein the state change comprises one or more of a clock frequency change, an operating voltage change, a power state change or a performance state change.

**2.** The computing system of claim 1, wherein the state change prevents one or more of a starvation condition or a failure in the at least one of the plurality of IO drivers.

**3.** The computing system of any one of claims 1 to 2, wherein the state data is to be collected from a first IO driver, a second IO driver, and a third IO driver, wherein the first IO driver is to tunnel traffic in accordance with a display protocol, wherein the second IO driver is to tunnel traffic in accordance with a storage protocol, and wherein the third IO driver is to tunnel traffic in accordance with a network protocol.

**4.** The computing system of claim 3, wherein the bandwidth allocation is to prioritize the display protocol over the storage protocol, and wherein the bandwidth allocation is to further prioritize the storage protocol over the network protocol.

**5.** The computing system of any one of claims 1 to 2, wherein the logic (177) coupled to the one or more substrates (175) includes transistor channel regions that are positioned within the one or more substrates (175).

**6.** A method of operating a performance-enhanced computing system comprising:

- collecting (62) state data from a plurality of input/output, IO, drivers, wherein each of the plurality of IO drivers tunnels traffic through a shared physical interface in accordance with a corresponding protocol, wherein the corresponding protocol differs from protocols corresponding to other IO drivers of the plurality of IO drivers, and the state data indicates, for each of the plurality of IO drivers, a level of activity and/or a bandwidth demand of the respective IO driver;
determining (64), based on the state data, a bandwidth allocation of the shared physical interface among the plurality of IO drivers; and
initiating, based on the bandwidth allocation, a state change of a processor of the performance-enhanced computing system, the processor coupled to the shared physical interface, wherein the state change comprises one or more of a clock frequency change, an operating voltage change, a power state change or a performance state change.

**7.** The method of claim 6, further comprises prioritizing at least one of the plurality of IO drivers and the state change preventing one or more of a starvation condition or a failure in at least one of the plurality of IO drivers.

**8.** The method of any one of claims 6 or 7, wherein collecting (62) the state data comprises collecting state data from a first IO driver, a second IO driver, and a third IO driver, wherein the first IO driver is to tunnel traffic in accordance with a display protocol, wherein the second IO driver is to tunnel traffic in accordance with a storage protocol, and wherein the third IO driver is to tunnel traffic in accordance with a network protocol.

**9.** The method of claim 8, further comprising prioritizing the display protocol over the storage protocol.

**10.** The method of any one of claims 8 or 9, further comprising prioritizing the storage protocol over the network protocol.

**11.** At least one computer readable storage medium comprising a set of executable program instructions, which when executed by a computing system, cause the computing system to perform the steps of the methods in any one of claims 6 to 10.

## Patentansprüche

**1.** Computersystem, umfassend:

eine gemeinsam genutzte physische Schnittstelle (168) ;
einen Prozessor, der mit der gemeinsam genutzten physischen Schnittstelle (168) gekoppelt ist;
eine Mehrzahl von Eingabe-/Ausgabe-, E/A-, Treibern, wobei jeder der Mehrzahl von E/A-Treibern zum Tunneln von Datenverkehr durch die gemeinsam genutzte physische Schnittstelle (168) gemäß einem entsprechenden Protokoll ausgelegt ist, wobei das entsprechende Protokoll von Protokollen, die anderen E/A-Treibern der Mehrzahl von E/A-Treibern entsprechen, verschieden ist;
Halbleitereinrichtung, umfassend:

ein oder mehrere Substrate (175); und
eine Logik (177), die mit den ein oder mehreren Substraten (175) gekoppelt ist, wobei die Logik (177) zumindest teilweise in einer oder mehreren einer konfigurierbaren Logik oder einer Hardware-Logik mit festgelegter Funktionalität implementiert ist und die Logik (177) ausgelegt ist zum:

Erfassen von Zustandsdaten von der Mehrzahl von E/A-Treibern, wobei die Zustandsdaten für jeden der Mehrzahl von E/A-Treibern einen Aktivitätsgrad und/oder einen Bandbreitenbedarf des jeweiligen E/A-Treibers angeben;
Bestimmen, basierend auf den Zustandsdaten, einer Bandbreitenzuweisung der gemeinsam genutzten physischen Schnittstelle (168) unter der Mehrzahl von E/A-Treibern; und
Einleiten, basierend auf der Bandbreitenzuweisung, einer Zustandsänderung des Prozessors, der mit der gemeinsam genutzten physischen Schnittstelle (168) gekoppelt ist, wobei die Zustandsänderung eines oder mehrere von einer Änderung einer Taktfrequenz, einer Änderung einer Betriebsspannung, einer Änderung eines Energiezustands oder einer Änderung eines Leistungszustands umfasst.

**2.** Computersystem nach Anspruch 1, wobei die Zustandsänderung eines oder mehrere von einem Verhungerungszustand oder einem Ausfall in zumindest einem der Mehrzahl von E/A-Treibern verhindert.

**3.** Computersystem gemäß einem der Ansprüche 1 bis 2, wobei die Zustandsdaten von einem ersten E/A-Treiber, einem zweiten E/A-Treiber und einem dritten E/A-Treiber zu erfassen sind, wobei der erste E/A-Treiber Verkehr gemäß einem Anzeigeprotokoll zu tunneln hat, wobei der zweite E/A-Treiber Verkehr gemäß einem Speicherprotokoll zu tunneln hat und wobei der dritte E/A-Treiber Verkehr gemäß einem Netzwerkprotokoll zu tunneln hat.

**4.** Computersystem nach Anspruch 3, wobei die Bandbreitenzuweisung das Anzeigeprotokoll gegenüber dem Speicherprotokoll priorisieren soll und wobei die Bandbreitenzuweisung ferner das Speicherprotokoll gegenüber dem Netzwerkprotokoll priorisieren soll.

**5.** Computersystem nach einem der Ansprüche 1 bis 2, wobei die mit den ein oder mehreren Substraten (175) gekoppelte Logik (177) Transistorkanalbereiche aufweist, die innerhalb der ein oder mehreren Substrate (175) angeordnet sind.

**6.** Verfahren zum Betreiben eines leistungsverbesserten Computersystems, umfassend:

Erfassen (62) von Zustandsdaten von einer Mehrzahl von Eingabe/Ausgabe-, E/A-, Treibern, wobei jeder der Mehrzahl von E/A-Treibern den Verkehr durch eine gemeinsam genutzte physische Schnittstelle gemäß einem entsprechenden Protokoll tunnelt, wobei das entsprechende Protokoll von Protokollen, die anderen E/A-Treibern der Mehrzahl von E/A-Treibern entsprechen, verschieden ist und die Zustandsdaten für jeden der Mehrzahl von E/A-Treibern einen Aktivitätsgrad und/oder einen Bandbreitenbedarf des jeweiligen E/A-Treibers angeben;
Bestimmen (64), basierend auf den Zustandsdaten, einer Bandbreitenzuweisung der gemeinsam genutzten physischen Schnittstelle unter der Mehrzahl von E/A-Treibern; und
Einleiten, basierend auf der Bandbreitenzuweisung, einer Zustandsänderung eines Prozessors des leistungsverbesserten Computersystems, wobei der Prozessor mit der gemeinsam genutzten physischen Schnittstelle gekoppelt ist, wobei die Zustandsänderung eines oder mehrere von einer Änderung einer Taktfrequenz, einer Änderung einer Betriebsspannung, einer Änderung eines Energiezustands oder einer Änderung eines Leistungszustands umfasst.

**7.** Verfahren nach Anspruch 6, ferner das Priorisieren zumindest eines der Mehrzahl von E/A-Treibern umfassend, und wobei die Zustandsänderung eines oder mehrere von einem Verhungerungszustand oder einem Ausfall in zumindest einem der Mehrzahl von E/A-Treibern verhindert.

**8.** Verfahren gemäß einem der Ansprüche 6 oder 7, wobei das Erfassen (62) der Zustandsdaten umfasst, Zustandsdaten von einem ersten E/A-Treiber, einem zweiten E/A-Treiber und einem dritten E/A-Treiber zu erfassen, wobei der erste E/A-Treiber Verkehr gemäß einem Anzeigeprotokoll zu tunneln hat, wobei der zweite E/A-Treiber Verkehr gemäß einem Speicherprotokoll zu tunneln hat und wobei der dritte E/A-Treiber Verkehr gemäß einem Netzwerkprotokoll zu tunneln hat.

**9.** Verfahren nach Anspruch 8, ferner das Priorisieren des Anzeigeprotokolls gegenüber dem Speicherprotokoll umfassend.

**10.** Verfahren nach einem der Ansprüche 8 oder 9, ferner das Priorisieren des Speicherprotokolls gegenüber dem Netzwerkprotokoll umfassend.

**11.** Wenigstens ein computerlesbares Speichermedium, das einen Satz ausführbarer Programmanweisungen umfasst, die, wenn sie von einem Computersystem ausgeführt werden, bewirken, dass das Computersystem die Schritte der Verfahren nach einem der Ansprüche 6 bis 10 implementiert.

## Revendications

**1.** Système informatique comprenant :

une interface physique partagée (168) ;
un processeur couplé à l'interface physique partagée (168) ;
une pluralité de pilotes d'entrée/sortie, E/S, chacun de la pluralité de pilotes d'E/S étant configuré pour acheminer avec encapsulation le trafic à travers l'interface physique partagée (168) conformément à un protocole correspondant, le protocole correspondant étant différant des protocoles correspondant aux autres pilotes d'E/S de la pluralité de pilotes d'E/S ;
appareil à semi-conducteur, comprenant :

un ou plusieurs substrats (175) ; et
une logique (177) couplée aux un ou plusieurs substrats (175), où la logique (177) est mise en œuvre au moins en partie dans une ou plusieurs logiques configurables ou logiques matérielles à fonctionnalité fixe, la logique (177) étant configurée pour :

collecter les données d'état en provenance de la pluralité de pilotes d'E/S, les données d'état indiquant, pour chacun de la pluralité de pilotes d'E/S, un niveau d'activité et/ou une demande de bande passante du pilote d'E/S respectif ;
déterminer, sur la base des données d'état, une allocation de bande passante de l'interface physique partagée (168) parmi la pluralité de pilotes d'E/S ; et
initier, sur la base de l'allocation de bande passante, un changement d'état du processeur couplé à l'interface physique partagée (168), où le changement d'état comprend un ou plusieurs changements parmi un changement de fréquence d'horloge, un changement de tension de fonctionnement, un changement d'état d'alimentation ou un changement d'état de performance.

**2.** Système informatique selon la revendication 1, dans lequel le changement d'état empêche une ou plusieurs des situations suivantes : une condition de famine ou une défaillance dans au moins l'un de la pluralité de pilotes d'E/S.

**3.** Système informatique selon l'une quelconque des revendications 1 et 2, dans lequel les données d'état doivent être collectées à partir d'un premier pilote d'E/S, d'un deuxième pilote d'E/S et d'un troisième pilote d'E/S, où le premier pilote d'E/S est chargé d'acheminer le trafic conformément à un protocole d'affichage, où le deuxième pilote d'E/S est chargé d'acheminer le trafic conformément à un protocole de stockage, et où le troisième pilote d'E/S est chargé d'acheminer le trafic conformément à un protocole de réseau.

**4.** Système informatique selon la revendication 3, dans lequel l'allocation de la bande passante doit donner la priorité au protocole d'affichage sur le protocole de stockage, et dans lequel l'allocation de la bande passante doit donner la priorité au protocole de stockage sur le protocole de réseau.

**5.** Système informatique selon l'une quelconque des revendications 1 et 2, dans lequel la logique (177) couplée aux un ou plusieurs substrats (175) comprend des régions de canaux de transistor qui sont positionnées dans les un ou plusieurs substrats (175).

**6.** Procédé d'exploitation d'un système informatique à performance améliorée, le procédé comprenant les étapes suivantes :

collecter (62) des données d'état en provenance d'une pluralité de pilotes d'entrée/sortie, E/S, où chacun de la pluralité de pilotes d'E/S achemine le trafic à travers une interface physique partagée conformément à un protocole correspondant, où le protocole correspondant diffère des protocoles correspondant aux autres pilotes d'E/S de la pluralité de pilotes d'E/S, et les données d'état indiquent, pour chacun de la pluralité de pilotes d'E/S, un niveau d'activité et/ou une demande de bande passante du pilote d'E/S respectif ;
déterminer (64), sur la base des données d'état, une allocation de bande passante de l'interface physique partagée parmi la pluralité de pilotes d'E/S ; et
initier, sur la base de l'allocation de bande passante, un changement d'état d'un processeur du système informatique à performances améliorées, le processeur étant couplé à l'interface physique partagée, le changement d'état comprenant un ou plusieurs changements parmi un changement de fréquence d'horloge, un changement de tension de fonctionnement, un changement d'état d'alimentation ou un changement d'état de performance.

**7.** Procédé selon la revendication 6, le procédé comprenant en outre de prioriser au moins l'un de la pluralité de pilotes d'E/S, et le changement d'état empêchant une ou plusieurs situations parmi une condition de famine ou une défaillance dans au moins l'un de la pluralité de pilotes d'E/S.

**8.** Procédé selon l'une quelconque des revendications 6 ou 7, dans lequel la collecte (62) des données d'état comprend de collecter des données d'état à partir d'un premier pilote d'E/S, d'un deuxième pilote d'E/S et d'un troisième pilote d'E/S, où le premier pilote d'E/S est chargé d'acheminer le trafic conformément à un protocole d'affichage, où le deuxième pilote d'E/S est chargé d'acheminer le trafic conformément à un protocole de stockage, et où le troisième pilote d'E/S est chargé d'acheminer le trafic conformément à un protocole de réseau.

9. Procédé selon la revendication 8, comprenant en outre de prioriser le protocole d'affichage par rapport au protocole de stockage.

10. Procédé selon la revendication 8 ou la revendication 9, comprenant en outre de prioriser le protocole de stockage par rapport au protocole de réseau.

11. Au moins un support de stockage lisible par ordinateur comprenant un ensemble d'instructions de programme exécutables qui, lorsqu'elles sont exécutées par un système informatique, amènent le système informatique à exécuter les étapes des procédés de l'une quelconque des revendications 6 à 10.

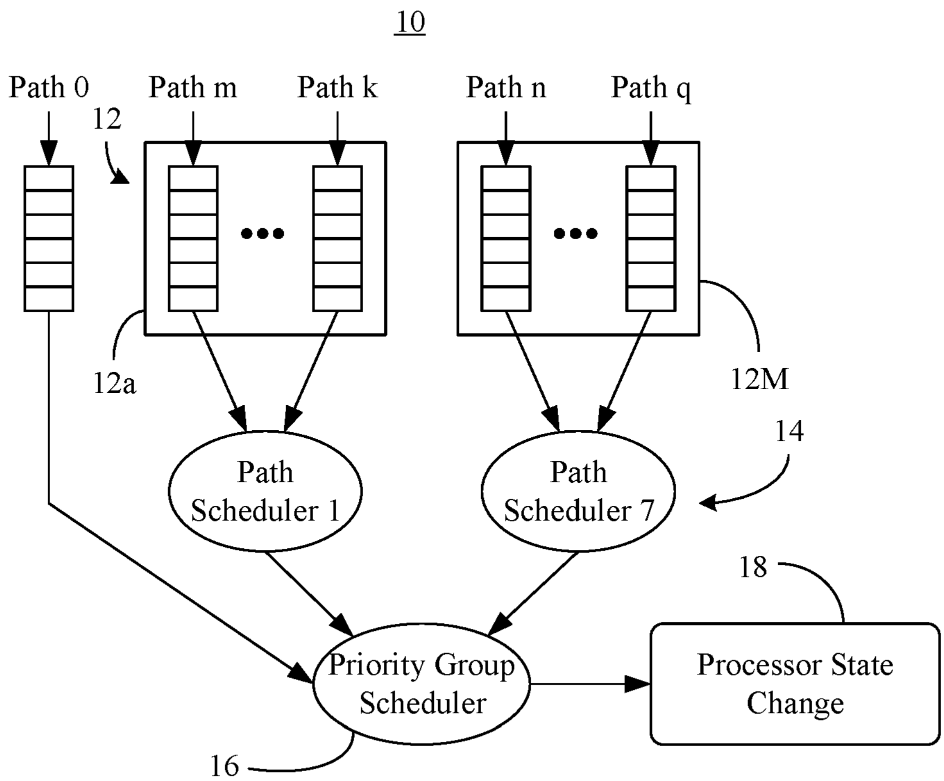
10
Path 0
Path m
Path k
Path n
Path q
12
12a
12M
14
Path Scheduler 1
Path Scheduler 7
18
Priority Group Scheduler
Processor State Change
16

FIG. 1

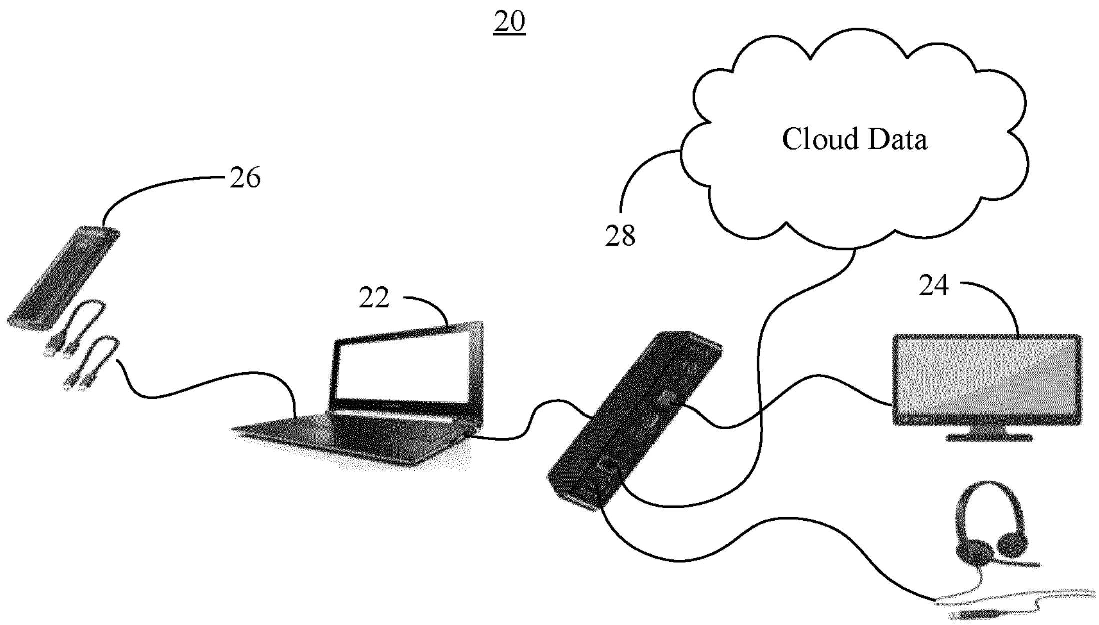
20
26
22
28
Cloud Data
24

FIG. 2

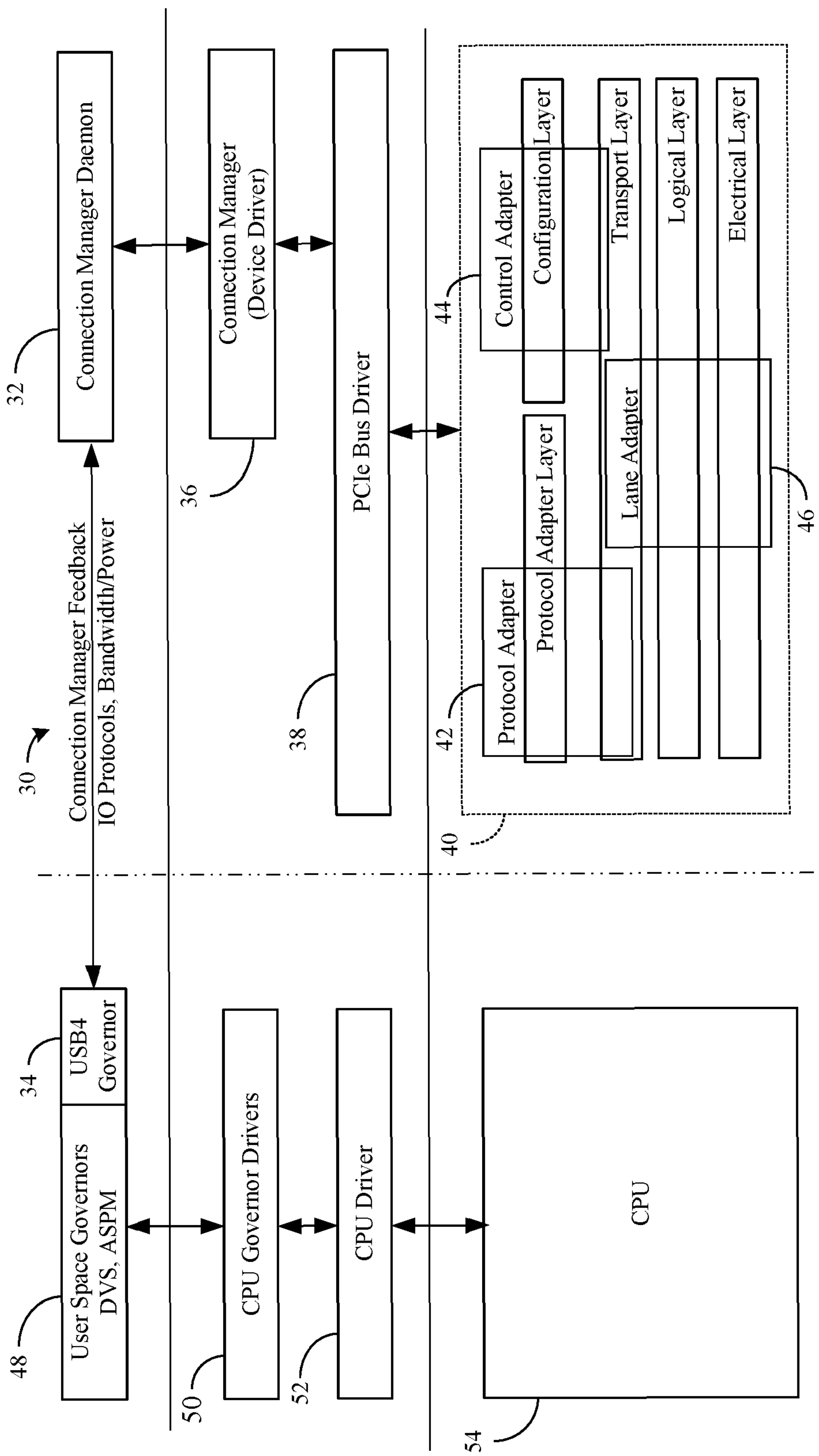
30
Connection Manager Feedback
IO Protocols, Bandwidth/Power
32
Connection Manager Daemon
36
Connection Manager
(Device Driver)
38
PCIe Bus Driver
40
42
Protocol Adapter
44
Control Adapter
46
Lane Adapter
Configuration Layer
Protocol Adapter Layer
Transport Layer
Logical Layer
Electrical Layer
34
USB4
Governor
48
User Space Governors
DVS, ASPM
50
CPU Governor Drivers
52
CPU Driver
54
CPU

FIG. 3

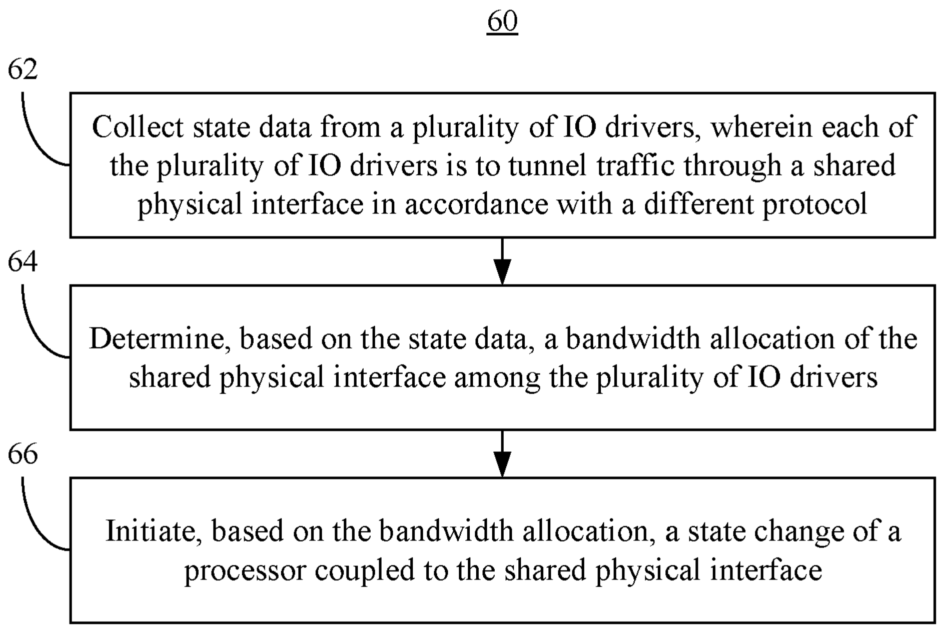
60
62
Collect state data from a plurality of IO drivers, wherein each of the plurality of IO drivers is to tunnel traffic through a shared physical interface in accordance with a different protocol
64
Determine, based on the state data, a bandwidth allocation of the shared physical interface among the plurality of IO drivers
66
Initiate, based on the bandwidth allocation, a state change of a processor coupled to the shared physical interface

FIG. 4

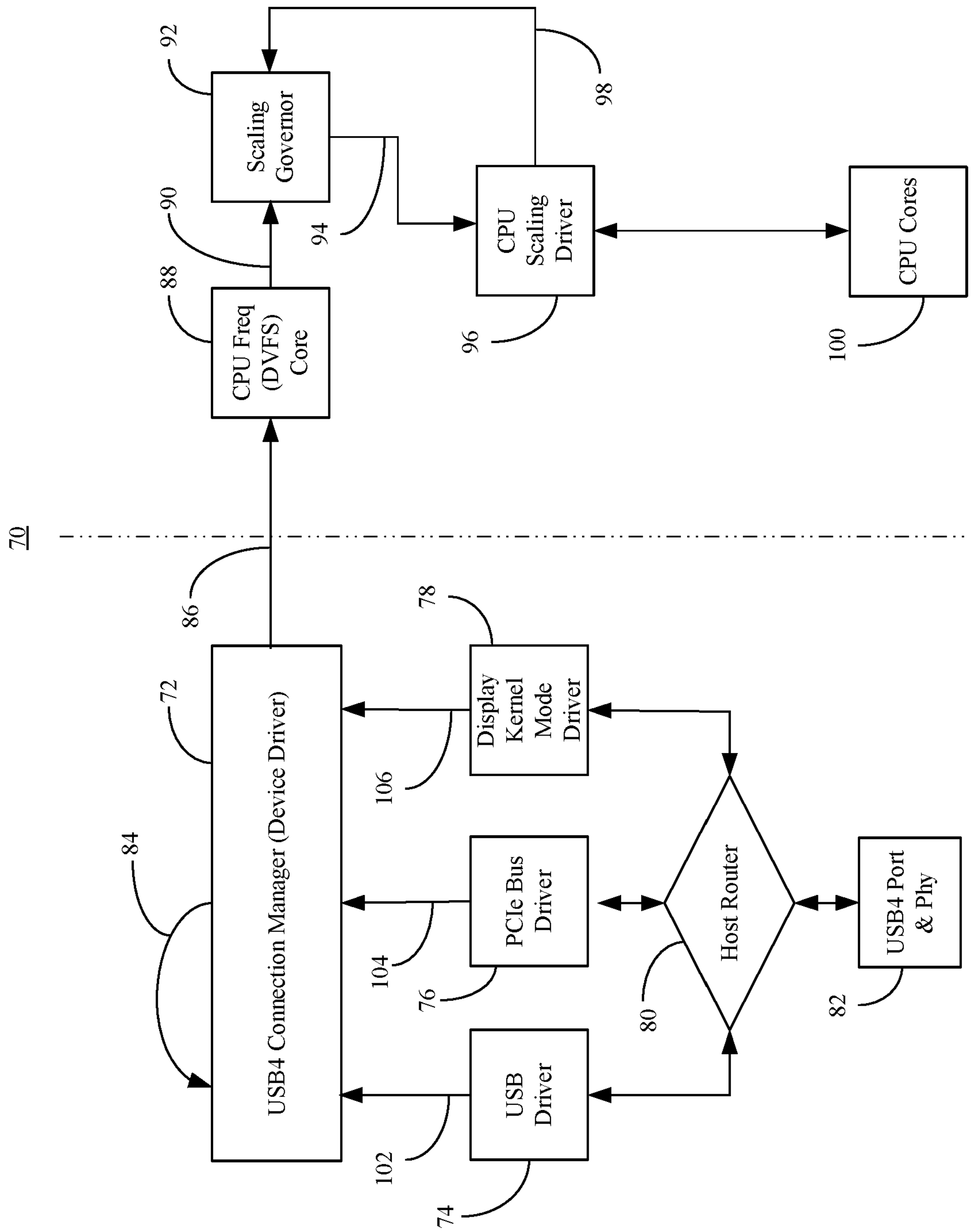
USB4 Connection Manager (Device Driver)
USB Driver
PCIe Bus Driver
Display Kernel Mode Driver
Host Router
USB4 Port & Phy
CPU Freq (DVFS) Core
Scaling Governor
CPU Scaling Driver
CPU Cores
70
72
74
76
78
80
82
84
86
88
90
92
94
96
98
100
102
104
106

FIG. 5

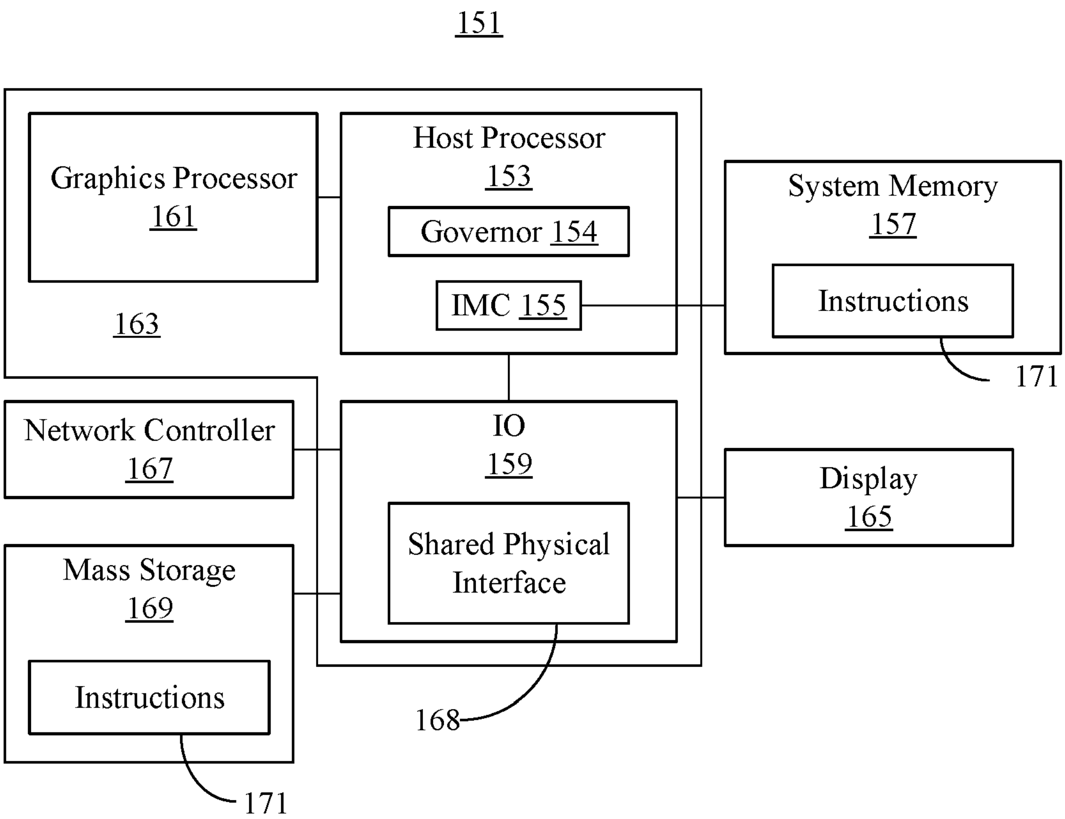
151
Graphics Processor
161
Host Processor
153
Governor 154
IMC 155
163
System Memory
157
Instructions
171
Network Controller
167
IO
159
Shared Physical
Interface
Display
165
Mass Storage
169
Instructions
168
171

FIG. 6

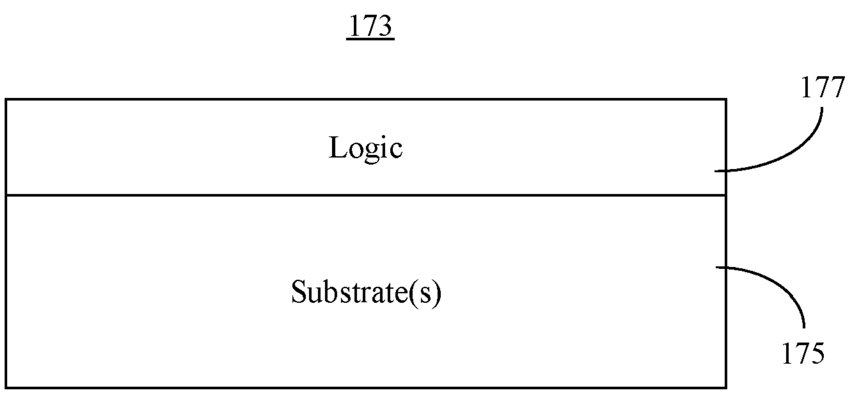
173
177
Logic
Substrate(s)
175

FIG. 7

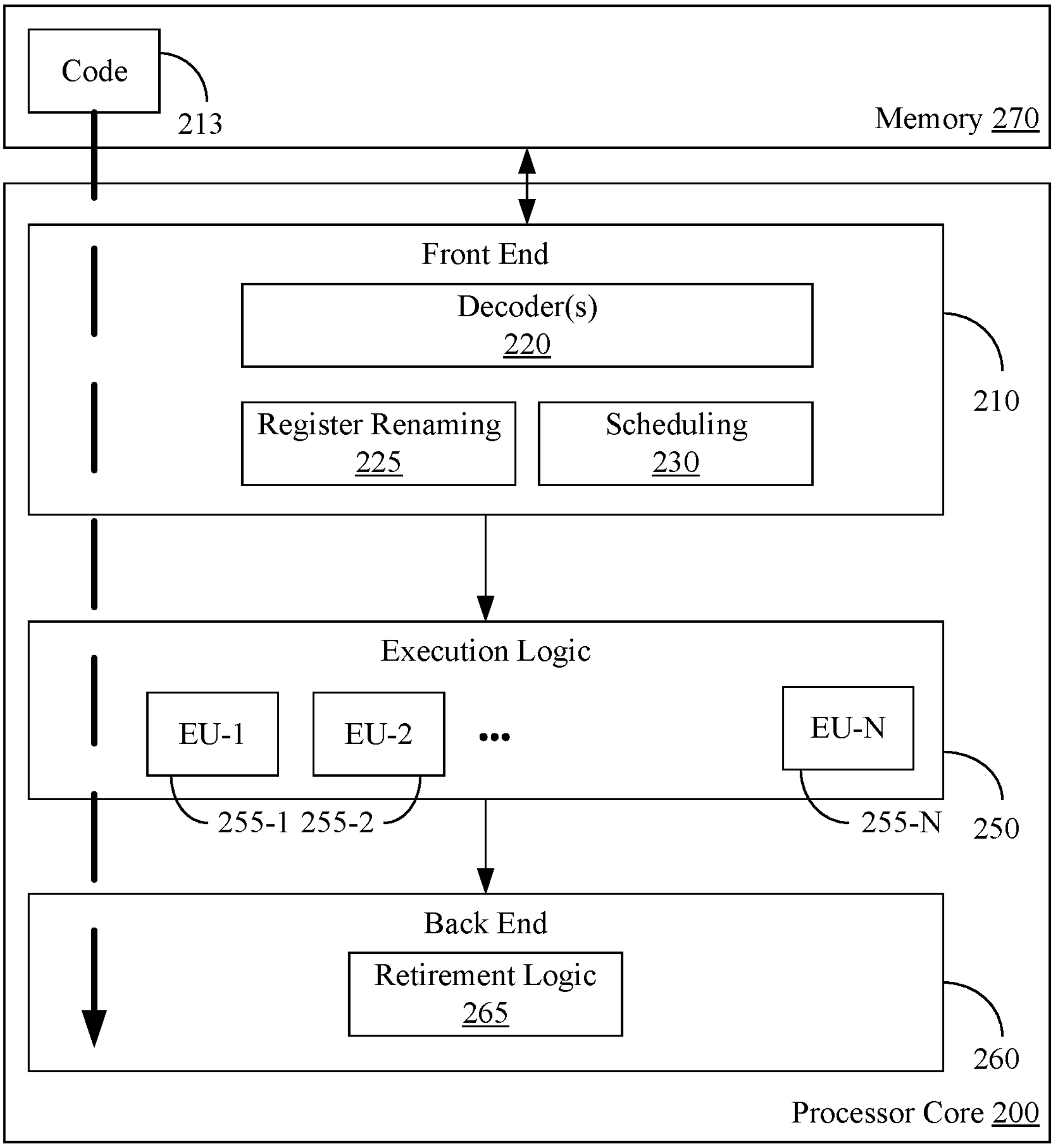
Code
213
Memory 270
Front End
Decoder(s)
220
Register Renaming
225
Scheduling
230
210
Execution Logic
EU-1
EU-2
•••
EU-N
255-1 255-2
255-N
250
Back End
Retirement Logic
265
260
Processor Core 200

FIG. 8

FIG. 9

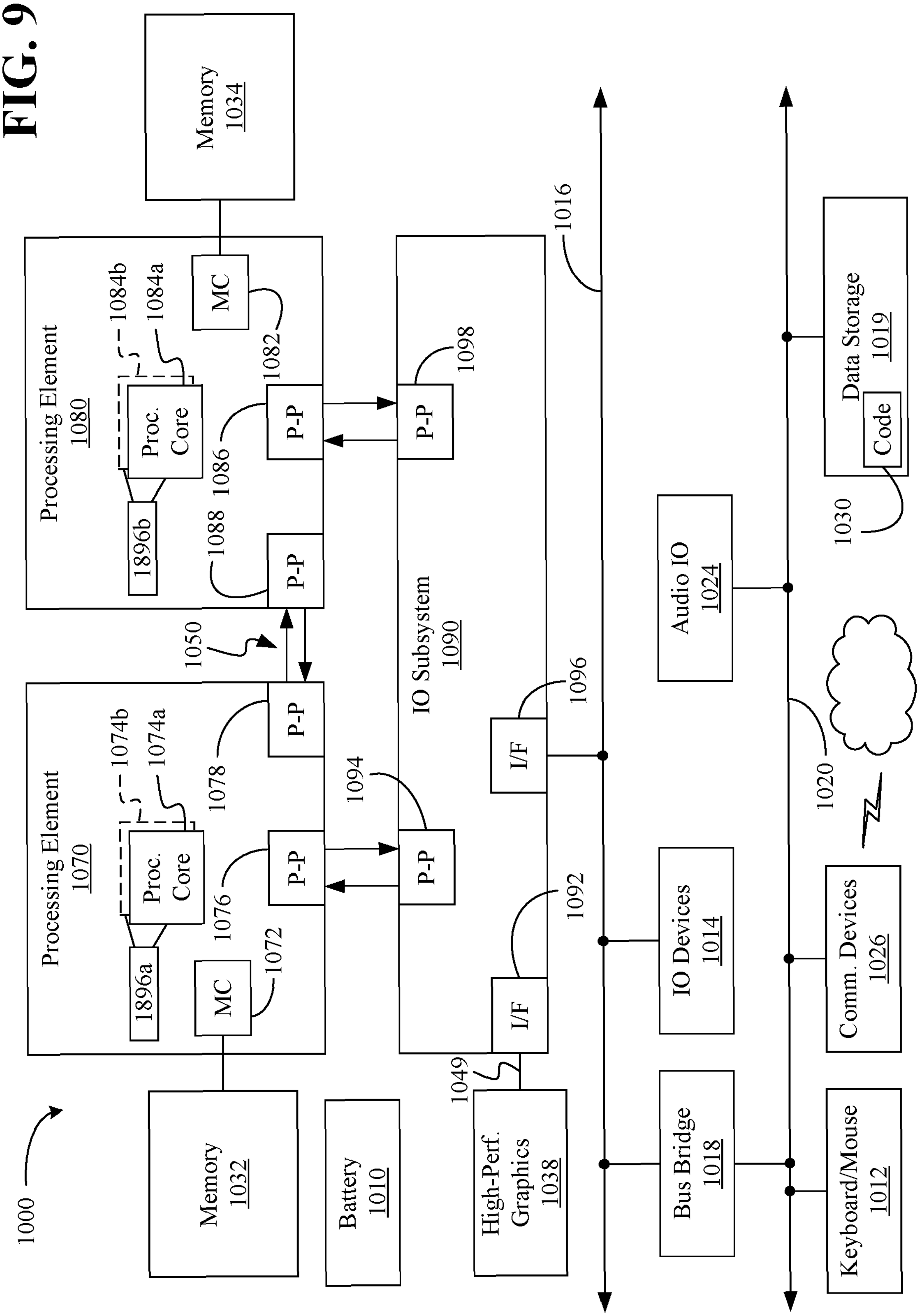

1000
Memory 1034
Processing Element 1080
1084b
1084a
MC
1082
Proc. Core
1896b
1086
1088
P-P
P-P
1098
1016
1050
Processing Element 1070
1074b
1074a
1078
Proc. Core
1896a
1076
1072
MC
IO Subsystem 1090
1094
1096
I/F
1092
I/F
1049
Memory 1032
Battery 1010
High-Perf. Graphics 1038
IO Devices 1014
Bus Bridge 1018
Audio IO 1024
Data Storage 1019
Code
1030
1020
Comm. Devices 1026
Keyboard/Mouse 1012

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 2012284434 A1
- US 2019317774 A1
- US 20130336334 A1

### Non-patent literature cited in the description

- DisplayPort/DP Standard, Version 2.0. Video Electronics Standards Association, 26 June 2019
- USB Specification 3.1, Rev. 1.0. USB Implementers Forum, 26 July 2013
- Peripheral Components Interconnect Express/PCIe, PCI EXPRESS Base Specification 5.0, Version 1.0. PCI Special Interest Group, 28 May 2019
- *Non-Volatile Memory/NVM EXPRESS Base Specification, Revision 1.4*, 10 June 2019